# EUROPÄISCHE PATENTSCHRIFT

(11) **EP 0 775 858 B1**
(45) Veröffentlichungstag und Bekanntmachung des Hinweises auf die Patenterteilung: **29.08.2001**
(21) Anmeldenummer: 96117337.4
(22) Anmeldetag: 29.10.1996
(51) Int. Cl.: F16J 15/34

(54) **Dichtungsanordnung für die Heisswasserabdichtung einer Welle gegenüber einem Gehäuse**
Seal assembly for hot water sealing of a shaft relative to a housing
Dispositif d'étanchéité d'un arbre par rapport à un bâti par rapport à de l'eau chaude

(30) Priorität: 22.11.1995 DE 29518543 U
(43) Veröffentlichungstag der Anmeldung: 28.05.1997
(73) Patentinhaber: Burgmann Dichtungswerke GmbH & Co. KG, 82515 Wolfratshausen (DE)
(72) Erfinder: Haselbacher, Peter, 82538 Geretsried (DE); Hässler, Wolfgang, 67549 Worms (DE)
(74) Vertreter: Schmidt, Horst, Dr.

(56) Entgegenhaltungen:
- US-A- 2 426 461
- US-A- 4 153 258
- US-A- 4 625 977
- US-A- 5 172 918

## Beschreibung

Die Erfindung betrifft eine Dichtungsanordnung gemäß dem Oberbegriff des Anspruchs 1.

Bei einer bekannten Dichtungsanordnung der gattungsgemässen Art ist die vorgeschaltete Drosselspaltdichtung in Gestalt eines Drosselspaltes mit betächtlicher axialer Abmessung zwischen einer Wellenhülse und einer die Hülse aufnehmenden Gehäusebohrung ausgebildet. Durch thermische Verwerfungen sowie aufgrund mechanischer Beanspruchungen bedingte Verlagerungen der Welle bzw. Hülse ist die Auslegung des Drosselspaltes Einschränkungen unterworfen. Insbesondere kann der Drosselspalt nicht beliebig verkleinert werden, so dass die bekannte Drosselspaltdichtung eine relativ hohe Leckage an abzudichtendem Medium, d.h. Heisswasser in einen Bereich verursacht, in dem die Gleitring-Hauptdichtung untergebracht ist, wodurch eine für die Funktion der Gleitring-Hauptdichtung nachteilige Umgebung geschaffen wird. Insbesondere kann die Temperatur im Vorraum der Gleitring-Hauptdichtung leicht einen zulässigen Wert überschreiten, was eine Ursache für einen häufig festgestellten vorzeitigen Ausfall dieser Dichtung ist. Ferner bewirkt ein langer enger Drosselspalt, dass es leicht zu Berührungen zwischen der Welle und der Gehäusebohrung kommen kann, insbesondere wenn eine Heisswasser führende Anlage, wie eine Speisewasserpumpe, Umwälzpumpe oder dgl., im abgekühlten Zustand in Betrieb gesetzt wird und die Wärmeausdehnung der Bauteile noch keinen Endzustand wie im Dauerbetrieb erreicht hat. Es ist deshalb häufige Praxis, mit bekannten Dichtungsanordnungen ausgestattete Anlagen kontinuierlich in Betrieb zu halten.

Der Erfindung liegt demzufolge die Aufgabe zugrunde, eine gattungsgemässe Dichtungsanordnung zu schaffen, die bei verbessertem Betriebsverhalten, insbesondere beim Anfahren einer mit der Dichtungsanordnung ausgestatteten Heisswasserpumpe, die Temperatur in einem Vorraum der Gleitring-Hauptdichtung zuverlässig innerhalb zulässiger Grenzen halten kann, damit eine thermisch bedingte Beschädigung der Gleitring-Hauptdichtung vermieden wird.

Diese Aufgabe wird in überraschend einfacher Weise gemäss dem kennzeichnenden Teil des Patentanspruches 1 dadurch gelöst, dass die Drosselspaltdichtung in Gestalt wenigstens eines aussenumfänglich federnd zusammengehaltenen segmentierten Ringelementes, durch das die Welle bzw eine Wellenhülse hindurchgeführt ist, ausgebildet ist, in dessen innerer Umfangsoberfläche hydrodynamisch wirksame Nuten oder Strukturen eingebracht sind. Zwar sind derartige Ringelemente grundsätzlich aus den US Patentschriften 2 426 461 und 5 172 918 bekannt, doch vermögen diese aufgrund ihrer Anordnung zu den zugehörigen Gleitring-Hauptdichtungen nicht, letztere vor thermischen Schäden zu bewahren. Das Ringelement wird bei Stillstand der Welle infolge der Vorspannkraft der umgelegten Vorspannfeder in dichtendem Eingriff mit der Welle gehalten. Bei der Erfindung hingegen wird bei Drehung der Welle zwischen der inneren Umfangsfläche des Ringelementes und der äusseren Umfangsfläche der Welle aufgrund hydrodynamischer Kräfte ein minimaler Spalt gebildet, der einerseits eine ausreichende Drosselwirkung gegen Leckage von Heisswasser in den Vorraum der Gleitring-Hauptdichtung und andererseits einen berührungslosen Lauf der Welle gegenüber dem Ringelement schafft. Die axiale Abmessung des Ringelementes kann daher wesentlich gegenüber der der bekannten Drosselspaltdichtung verringert werden. Die Montage der Dichtungsanordnung sowie die Auslegung der damit versehenen Gerätschaft sind entsprechend vereinfacht. Da sichergestellt ist, dass keine oder nur sehr geringe Mengen an Heisswasser in den Vorraum der Gleitring-Hauptdichtung gelangen können, können die Temperaturen im Vorraum auf ein für den Betrieb der Gleitringdichtung zulässiges Mass gehalten werden. In weiterer Ausgestaltung der Erfindung kann die Anordnung aus Wellenhülse, segmentiertem Ringelement und Gleitring-Hauptdichtung in Gestalt einer Montageeinheit zusammengefasst sein. An die Abmessungstoleranzen zwischen Wellenhülse und Gehäusebohrung werden geringere Anforderungen als bei der bekannten Dichtungsanordnung gestellt, da die Wirkung der erfindungsgemässen Drosselspaltdichtung nicht von der Einhaltung gewisser vorbestimmter enger Spaltweiten zwischen diesen Teilen abhängt. Zwar sind segmentierte Drosselringelemente grundsätzlich bekannt, doch wurden diese bislang nur als Hauptdichtung, vorwiegend zur Abdichtung gasförmiger Medien eingesetzt. Weiterbildungen der Erfindung sind in den Patentansprüchen aufgeführt.

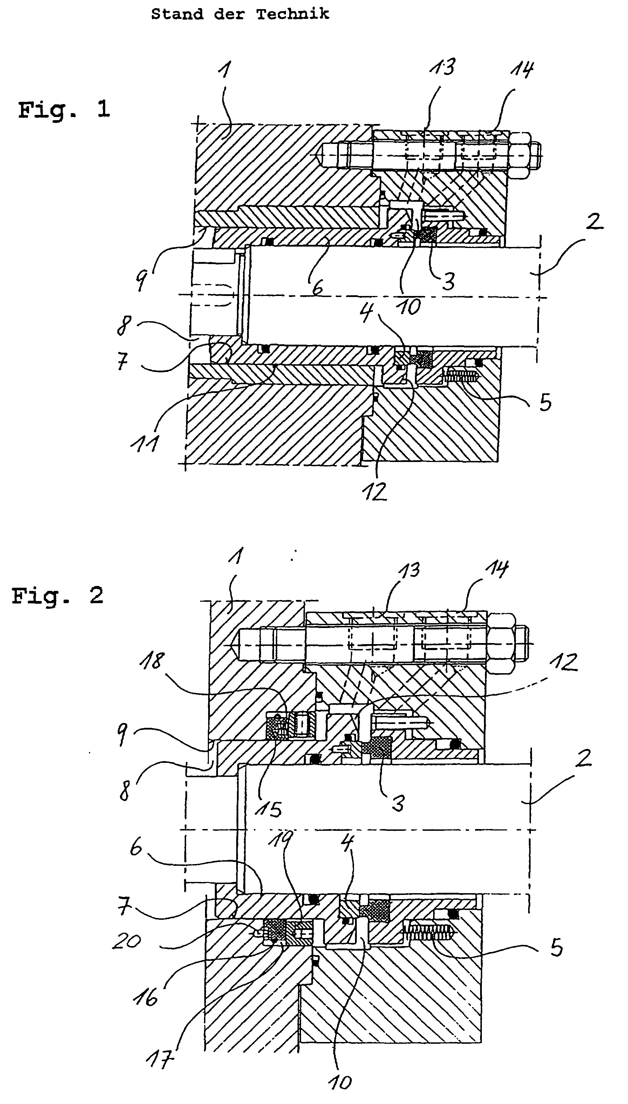

Die Erfindung wird nachfolgend anhand der Zeichnung und einer Ausführungsform unter vorheriger Bezugnahme auf den Stand der Technik näher erläutert. Es zeigen:
Fig. 1 in längsgeschnittener Ansicht eine herkömmliche Dichtungsanordnung,
Fig. 2 in einer Ansicht ähnlich Fig. 1 eine erfindungsgemäss aufgebaute Dichtungsanordnung,
Zunächst wird auf Fig. 1 Bezug genommen, die eine bekannte Dichtungsanordnung zur Abdichtung einer Welle 2 gegenüber einem Gehäuse 1, z.B. dem Gehäuse einer Heisswasserpumpe, zeigt. Die Dichtungsanordnung umfasst eine Hauptdichtung in Gestalt einer Gleitringdichtung, bestehend aus einem drehfest am Gehäuse 1 gehaltenen Gleitring 3 und einem damit zusammenwirkenden mit der Welle 2 rotierenden Gleitring 4. Auf den drehfesten Gleitring 3 wirkt die Kraft von Vorspannfedern 5, was den drehfesten Gleitring 3 gegen den rotierenden Gleitring 4 vorspannt, um die radialen Dichtflächen der Gleitringe 3 und 4 bei Stillstand der Welle 2 in dichtendem Eingriff miteinander zu halten. Bei Drehung der Welle 2 und damit des Gleitringes 4 treten hydrodynamische Kräfte zwischen den Dichtflächen auf, die einen Dichtspalt bilden, so dass beim Betrieb der Welle die Dichtflächen verschleissminimierend voneinander beabstandet sind.

Der rotierende Gleitring 4 ist von einer Hülse oder Büchse 6 gehalten, die auf der Welle 2, wie dargestellt, aufgesetzt ist. Die Hülse 6 ist in einer Bohrung 8 des Gehäuses 1 mit einem geeigneten engen Passitz dergestalt aufgenommen, dass die äussere Umfangsfläche 7 der Hülse 6 mit der inneren Umfangsfläche 9 der Gehäusebohrung 8 einen Ringspalt 11 bildet, der eine Drossel schafft, um das Innere des Gehäuses 1 gegenüber einem Vorraum 10 nahe der Gleitringdichtung mehr oder minder wirksam abzudichten. Erwünscht ist eine möglichst geringe Leckage an Heisswasser in den Vorraum 10, d.h. eine Leckage, die nicht diejenige der Gleitring-Haupdichtung überschreiten sollte. Dies erforfert entsprechend geringe Spaltweiten des Drosselspaltes 11, während andererseits die Spaltweite im Hinblick auf eine ungehinderte Drehung der Welle 2 nicht beliebig verringert werden kann.

Für einen störungsfreien Betrieb der Gleitring-Hauptdichtung ist es wesentlich, dass die Temperatur des Mediums im Voraum 10 der Dichtung auf ein zulässiges Mass gehalten wird. Das in den Vorraum 10 längs des Drosselspaltes 11 einsickernde Heisswasser würde eine für einen störungsfreien Betrieb der Gleitring-Hauptdichtung zu hohe Temperatur haben. Es ist daher vorgesehen, durch den Vorraum 10 ein Kühlmedium zirkulieren zu lassen, das durch eine bei 13 angedeutete Einführöffnung in den Vorraum 10 eingeleitet und durch eine bei 14 angedeutete Auslassöffnung aus dem Vorraum 10 abgeführt werden kann. Zur Vergleichmässigung der Temperatur kann ferner an einem radialen Vorsprung der Hülse 6 ein bei 12 angedeutetes Laufrad vorgesehen sein.

Die Dichtungsanordnung nach der Erfindung ist in Fig. 2 gezeigt. In Fig. 2 tragen gleiche oder ähnliche Bauteile wie bei der bekannten Dichtungsanordnung nach Fig. 1 die gleichen Bezugszeichen und erübrigt sich im folgenden eine erneute Beschreibung dieser Teile.

Die Dichtungsanordnung nach der Erfindung unterscheidet sich von der bekannten Dichtungsanordnung durch eine andere Ausbildung der der Gleitring-Hauptdichtung vorgeschalteten Drosselspaltdichtung. Insbesondere übernimmt diese Funktion erfindungsgemäss ein Ringelement 15, das in einer Aussparung 17 des Gehäuses 1 aufgenommen ist und die Hülse 6 mit einem geeigneten Passitz umgibt. Das Ringelement 15 setzt sich aus zwei oder mehreren Ringsegmenten zusammen und besteht vorzugsweise aus einem Material mit Notlaufeigenschaft, wie einem Kohlenstoffmaterial. Die Ringsegmente sind durch eine aussen umgelegte Ringfeder 16 zusammengehalten. Die Ringfeder 16 bewirkt, dass das segmentierte Ringelement 15 federnd gegen die Hülse 6 vorgespannt ist. Derartige segmentierte Ringelemente sind unter der Bezeichnung "Clearance Seal Typ CSR" von der Firma Feodor Burgmann Dichtungswerke GmbH & Co., Äussere Sauerlacher Str. 6-10, D-82502 Wolfratshausen erhältlich.

Bei Stillstand der Welle 2 steht die innere Umfangsfläche des segmentierten, Ringelementes 15 infolge der Vorspannkraft der Feder 16 in abdichtender Berührung mit der äusseren Umfangsfläche 7 der Hülse 6. Bei Drehung der Welle 2 treten dagegen hydrodynamische Kräfte auf, die bewirken, dass sich ein enger Drosselspalt zwischen der inneren Umfängsfläche des Ringelemetes 15 und der äusseren Umfangfläche 7 der Hülse 6 bildet. Der Drosselspalt vermag einesteils den Vorraum 10 wirksam gegenüber dem Gehäuseinneren abzudichten und ermöglicht andererseits einen berührungslosen Lauf zwischen der Hülse 6 und dem Ringelement 15. Da die Spaltweite wesentlich geringer und damit die Dichtwirkung wesentlicher besser als bei der bekannten Drosselspaltichtung ist, kann die erfindunsgemässe Dichtungsanordnung eine wesentlich geringere axiale Abmessung haben.

Das segmentierte Ringelement 15 liegt, wie Fig. 1 zeigt, mit einer axialen Stirnfläche dichtend an einer radialen Schulterfläche der Gehäuseausnehmung 17 an. Ein am Gehäuse 1 befestigter Widerlager- oder Stellring 19 positioniert das Ringelement 15 gegenüber dem Gehäuse 1. Vorspannfedern 18 sind vorgesehen, um das Ringelement 15 gegen die radiale Schulterfläche der Gehäuseausnehmung 17 vorzuspannen. Die Vorspannfedern 18 stützen sich mit ihren einen axialen Enden am Ringelement 15 und mit den anderen axialen Enden am Stellring 19 ab. Ein von der radialen Schulterfläche der Gehäuseausnehmung 17 abstehender Stift 20 ist in einer Bohrung im Ringelement 15 mit Spiel aufgenommen und verhindert, dass sich das Ringelement 15 zusammen mit der Wellenhülse 6 drehen kann.

Ferner ist vorgesehen, dass in der inneren Umfangsfläche jedes segmentierten Ringelementes hydrodynamisch wirkende Nuten oder Strukturen eingebracht sind, die die Drosselspaltbildung bei Drehung der Welle begünstigen.

Die Erfindung wurde vorausgehend anhand einer Ausführungsform mit nur einem segmentierten Ringelement beschrieben. Es versteht sich jedoch, dass auch zwei oder mehrere derartige Ringelemente 15 axial nebeneinander angeordnet bzw. zu einem Ringelementenpaket zusammengefasst sein können, um eine höhere Dichtwirkung zu erzielen. Ferner kann eine Tandemanordnung vorgesehen sein, wobei zwischen den beabstandeten Ringelementen bzw. Ringelementenpaketen eine Vorspannfeder vorgesehen werden kann, um die Ringelemente bzw. Ringelementenpakete gegen benachbarte Flächen des Gehäuses dichtend vorzuspannen. Obschon segmentierte Ringelemente aus einem Kohlenstoffmaterial aufgrund der guten Notlaufeigenschaften bevorzugt werden, versteht es sich, dass auch andere geeignete Materialien verwendet werden können.

## Patentansprüche

1. Dichtungsanordnung für die Heisswasserabdichtung einer Welle (2) gegenüber einem Gehäuse (1) mit einer Gleitring-Hauptdichtung, der eine Drosselspaltdichtungseinrichtung an der dem Heisswasser ausgesetzen Seite vorgeschaltet ist, wobei zwischen der Gleitring-Hauptdichtung und der Drosselspaltdichtungseinrichtung ein Vorraum (10) zur Aufnahme einer Leckage an Heisswasser längs des Drosselspaltes der Drosselspaltdichtungseinrichtung vorgesehen ist, **dadurch gekennzeichnet**, dass die Drosselspaltdichtungseinrichtung wenigstens ein aussenumfänglich federnd zusammengehaltenes, drehfest gegenüber dem Gehäuse (1) gehaltenes segmentiertes Ringelement (15) mit in seiner mit der Welle (2) in Eingriff bringbaren inneren Umfangsfläche vorgesehenen hydrodynamisch wirkenden Strukturen umfasst.

2. Dichtungsanordnung nach Anspruch 1, **dadurch gekennzeichnet**, dass das Ringelement (15) aus einem Kohlenstoffmaterial gebildet ist.

3. Dichtungsanordnung nach Anspruch 1 oder 2, **dadurch gekennzeichnet**, dass Seite an Seite mehrere Ringelemente (15) zu einem Ringelementenpaket zusammengefasst sind.

4. Dichtungsanordnung nach einem der vorhergehenden Ansprüche, **dadurch gekennzeichnet**, dass ein Paar axial beabstandete Ringelemente (15) bzw. Ringelementenpakete vorgesehen ist.

5. Dichtungsanordnung nach einem der vorhergehenden Ansprüche, **dadurch gekennzeichnet**, dass jedes Ringelement (15) bzw. Ringelementenpaket zur dichtenden Eingriffnahme mit benachbarten Bereichen des Gehäuses axial vorgespannt ist.

6. Dichtungsanordnung nach einem der vorhergehenden Ansprüche, **dadurch gekennzeichnet**, dass jedes Ringelement (15) bzw. Ringelementenpaket mit einem auf der Welle aufsetzbaren Hülsenelement (6) zusammenwirkt, und dass das Hülsenelement, das Ringelement bzw. Ringelementenpaket und die Gleitring-Hauptdichtung (3,4) zu einer Montageeinheit zusammengefasst sind.

## Claims

1. A seal assembly for hot water sealing of a shaft (2) relative to a housing (1), including a sealing ring main seal and a throttle gap sealing device disposed at a side of the sealing ring main seal exposed to the hot water, whereby an anteroom for accommodating leakage of hot water along the throttle gap of the throttle gap sealing device is provided between the sealing ring main seal and the throttle gap sealing device, **characterised in that** said throttle gap sealing device comprises at least a single segmented ring element (15) held non-rotationally relative to the housing (1), said segmented ring element being held together resiliently around its outer periphery and having hydrodynamically effective structures in its inner peripheral surface engageable with the shaft (2).

2. The seal assembly in accordance with claim 1, **characterised in that** the ring element (15) is formed of a carbon material.

3. The seal assembly in accordance with claim 1 or 2, **characterised in that** a plurality of ring elements (15) arranged side-by-side are combined to form a ring element packet.

4. The seal assembly in accordance with any of the preceding claims, **characterised in that** a pair of axially spaced ring elements (15) or ring element packets are provided.

5. The seal assembly in accordance with any of the preceding claims, **characterised in that** each ring element (15) or ring element packet is axially biased for sealing engagement with adjacent portions of the housing.

6. The seal assembly in accordance with any of the preceding claims, **characterised in that** each ring element (15) or ring element packet co-operates with a sleeve element (6) adapted to be mounted on the shaft, and in that the ring element or ring element packet and the sealing ring main seal (3, 4) are combined into a pre-assembled unit.

## Revendications

1. Dispositif d'étanchéité pour réaliser l'étanchéité d'eau chaude d'un arbre (2) par rapport à un boîtier (1) avec une garniture d'étanchéité principale à anneau glissant en avant de laquelle est monté du côté exposé à l'eau chaude un dispositif d'étanchéité à fente d'étranglement, une cavité d'accès (10) étant prévue entre la garniture d'étanchéité principale à anneau glissant et le dispositif d'étanchéité à fente d'étranglement pour recevoir une fuite d'eau chaude le long de la fente d'étranglement du dispositif d'étanchéité à fente d'étranglement, **caractérisé en ce que** le dispositif d'étanchéité à fente d'étranglement comprend au moins un élément annulaire (15) segmenté assemblé périphériquement extérieurement élastiquement maintenu fixe en rotation par rapport au boîtier (1) comprenant des structures ayant un effet hydrodynamique prévues dans sa surface périphérique intérieure pouvant être mise en contact avec l'arbre (2).

2. Dispositif d'étanchéité selon la revendication 1, **caractérisé en ce que** l'élément annulaire (15) est formé en un matériau de carbone.

3. Dispositif d'étanchéité selon la revendication 1 ou 2, **caractérisé en ce que** plusieurs éléments annulaires (15) sont groupés côte à côte en un paquet d'éléments annulaires.

4. Dispositif d'étanchéité selon l'une quelconque des revendications précédentes, **caractérisé en ce qu**'une paire d'éléments annulaires (15) respectivement de paquets d'éléments annulaires espacés axialement sont prévus.

5. Dispositif d'étanchéité selon l'une quelconque des revendications précédentes, **caractérisé en ce que** chaque élément annulaire (15) respectivement paquet d'éléments annulaires est précontraint axialement en liaison mécanique d'étanchéité avec des secteurs voisins du boîtier.

6. Dispositif d'étanchéité selon l'une quelconque des revendications précédentes, **caractérisé en ce que** chaque élément annulaire (15) respectivement paquet d'éléments annulaires coopère avec un élément de douille (6) pouvant être monté sur l'arbre, et en ce que l'élément de douille, l'élément annulaire respectivement le paquet d'éléments annulaires et garniture d'étanchéité principale à anneau glissant (3, 4) sont groupés en une unité de montage.
